# EUROPEAN PATENT APPLICATION

(11) **EP 2 002 709 A2**
(43) Date of publication of application: **17.12.2008**
(21) Application number: 07730508.4
(22) Date of filing: 04.04.2007
(51) Int. Cl.: A01G 25/06

(54) **POROUS TUBE FOR EXUDATIVE IRRIGATION AND METHOD FOR MANUFACTURING SAME**

(30) Priority: 06.04.2006 ES 200600974
(71) Applicant: Porec Irrigation System, S.L., 08301 Mataro (Barcelona) (ES)
(72) Inventor: GAYA I ALTIRIBA, Josep Mª, 08304 Mataró (ES)
(74) Representative: Gallego Jiménez, José Fernando
(86) International application number: PCT/ES2007/070070
(87) International publication number: WO 2007/113367

(57) **Abstract**

Tube (1) for exudative irrigation and method for manufacturing the same. The tube comprises a core (2) of textile tube formed by a knitted fabric covered with a covering (3) of porous material, which comprises a resin mixture (13) of acrylic or polyurethane type, plus additives such as for example, plasticizers, dyes, thickeners and biostatic substances adapted to prevent the proliferation of bacteria, algae or fungi. The core is composed of one or more fibres in the form of a thread as a single textile fibre (7) of thread, woven using a method of self-interlacing, forming horizontal rows of loops, or possibly a warped fabric with independent threads, using a warp method with one needle for each thread, forming vertical columns of loops.

## Description

### Technical field of the invention

The present invention relates to the manufacturing of porous tubes for exudative irrigation, of the type which have a core of textile tube, covered with a porous material, that include a mixture of resins and additives, such as for example plasticizers, dyes, thickeners, etc.,

### State of the art

For some time in the agricultural industry and in gardening, the practice of exudative irrigation based on the utilization of tubes provided with pores for the circulation of water, has been well known. By the action of water pressure, the later goes out through the pores and irrigates the surrounding land. The US patent Nº 254902, of 29 January 1918 already discloses a system of irrigation of this kind.

The closest state of the art tube for exudative irrigation is cited under patent EP0462038 (with priority ES 2032239). The tube disclosed is well known in the art and in the agricultural industry for its capacity to convey water that emerges in the form of drops or by means of exudation for the irrigation thanks to the porosity of its walls. The said tube comprises an integral core of textile tube, covered with a porous material composed of a mixture of resin, plasticizer, colloidal smoke black, bactericides, fungicides, algaecides and thickeners. The structure and constitution of the tube has height resistance to the action of inorganic and organic agents, as well as high pulling and breakage mechanical strength for irrigation fluid pressure, all which allows its installation, either superficial or buried. The said construction gives the tube a high mechanical flexibility that makes it suitable for the agricultural industry.

In the specifications of said patent, it is stated that the core of textile tube can be woven according to any chosen process of textile knitting. The patent however only describes the manner to obtain the core by means of flat knitting processes, where two yarns, one for the weft and one for the warp, intertwine in a stretched way forming a uniform structure.

It is known that the flat knitting technique gives the fabric a high degree of stiffness, which can be a drawback in the case of installation of irrigation tubes in agriculture, as they are more susceptible to breakage (the knitting machines have a maximum performance which at present is of 1000 cycles per minute). Indeed, for manufacturing a fabric with tubular characteristic by the flat knitting technique it is necessary to use the right and left selvedges in order to act as an union seam between the upper and lower fabric, these seams give the tube a structural stiffness additional to that already caused by the own bond of fabric formed during the flat knitting technique.

On the other hand, the porosity that these tubes have, which is desirable to the effects of the correct functionality of exudation, can facilitate, when the tube is buried, the introduction of roots in the tube, and also the destruction of the same, which presents a new problem. Furthermore, an additional drawback is the abrasiveness of the powders in the resin additives of the porous layers, which can damage the root ends of the plants to be irrigated.

Furthermore, the tube disclosed on this patent incorporates bactericides, algaecides and fungicides, which can damage the crop, as well as chlorine and phosphorus, which are elements declared unhealthy, dangerous and harmful from the Health and Safety and Environmental point of view.

The aim of the present invention is to provide a global solution to the previous drawbacks.

### Exposition of the invention

To that end, the objective of the present invention is to produce a porous tube for exudative irrigation, of a new concept and raised functionality, according to the characteristics stated in claim 1.

The embodied characteristics of the present invention are defined in claim 2 and subsequent.

According to one other aspect of the invention, the process for manufacturing the above-mentioned tube is revealed, by means of "knitting" processes, according to claim 10 and successive, and in particular by means of the flat knitting technique, in a circular machine having a small diameter, from a unique yarn for each working group which intertwines itself forming horizontal rows or loops.

Depending on the kind of crop to be irrigated, tubes requiring much flexibility along their run can be required, although usually they are mainly straight lines (although flexible). For the later supposition (mainly straight lines), the tube of the present invention using the weft knitting system has been ideated, since market demands porous tubes for irrigating crops extending in straight lines.

Thus, for harvesting "in line" crops it is preferable to use the weft knitting system with the simplest existing bind since in this way its behaviour, together with that of the resin, will be optimal. Also it is possible to get the most production capacities out of the machine (up to ca 4000 r.p.m.).

The machine will be preferably a "circular" small diameter one and the fabric, according to the invention, is obtained from a unique yarn for each working group that intertwines itself forming horizontal rows or loops.

On the contrary, for (less frequent) applications where it could be necessary that the pipe develop complex circuits with curves, it would be more suitable to use the warp knitting system. This permits special bounds to be made that give the fabric the ability of acting as an accordion, preserving in this way all the mechanical properties of the fabric and its covering when the exudative effect is working and giving more versatility since one yarn corresponds to each needle, although the productive process is slower (at present at 2.000 r.p.m. only).

According to the invention, the textile tube of the core is treated with the novel plasma technology to improve the adherence of the resin and thus minimizes the required quantity while improving their permeability and perspiration properties and maintaining at the same time the mechanical strength.

### Brief description of drawings

An embodiment of the present invention will be further described in the following with reference to the annexed drawings for better comprehension, which are to be understood as merely illustrative, and in which:
Fig. 1 is a longitudinal section view of the first variant of an exudative tube according to the present invention:
Fig. 2 is another longitudinal section view of the second variant of the tube according to the invention:
Fig. 3 is a cross section view, which shows the tubes shown in preceding Figs. 1 and 2:
Fig. 4 shows a number of cross sections of the tube with their variations of warp knitting bonds for achieving different thickness and elasticity's;
Fig. 5 is a schematic view of the manufacturing process of the porous tube for exudative irrigation of the present invention;
Fig. 6 is a schematic view of a knitting machine for knitting tubular goods by warp knitting, applicable for the manufacturing of the tube of the present invention;
Fig. 7 is a schematic view of a knitting machine for knitting tubular goods by weft knitting, applicable for the manufacturing of the tubes of the present invention.

### Detailed description of drawings

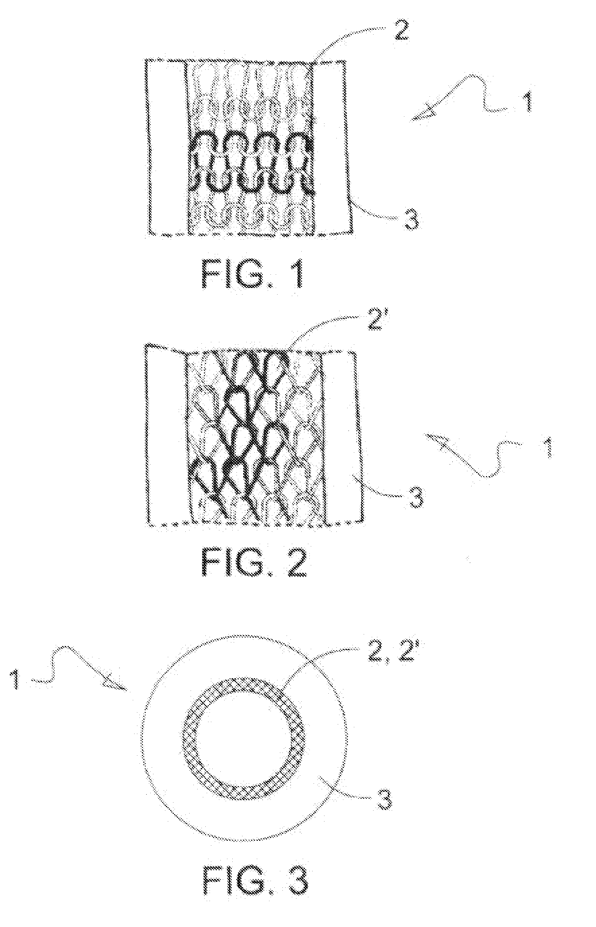

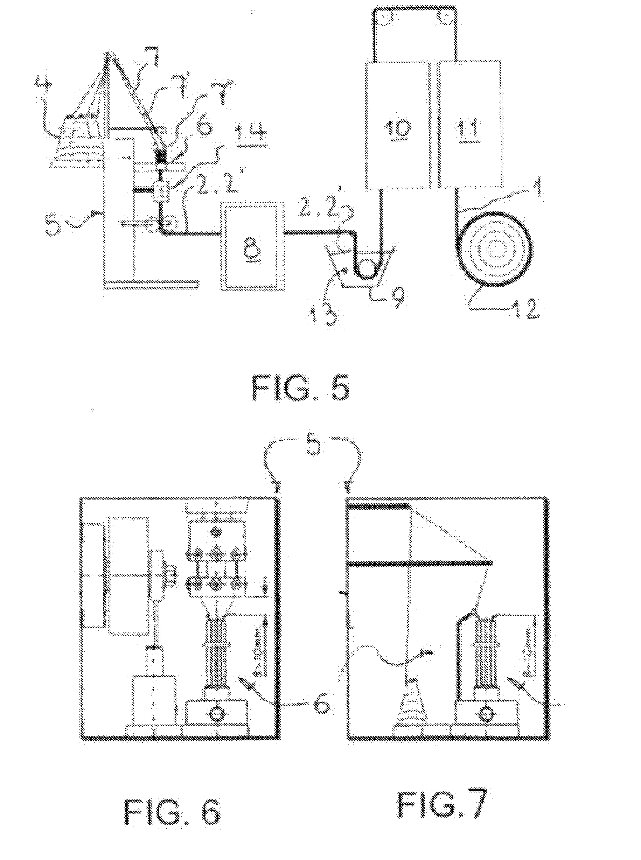

In said drawings it can be seen the composition (Figs. 1 to 4) and the manufacturing process (Figs. 5 and 6) of the porous tube for exudative irrigation of the present invention.

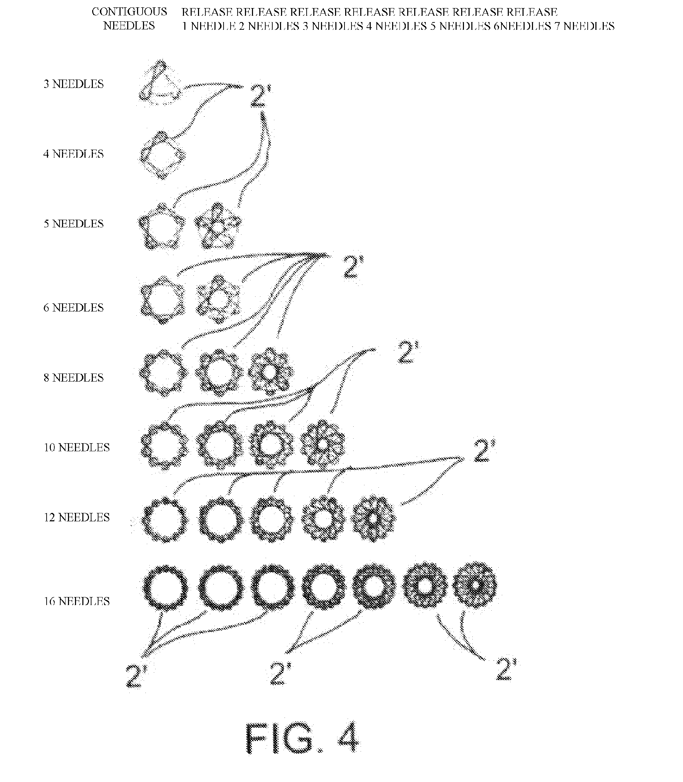

The tube 1 is formed by a nucleus or core 2 made from a tube of textile material and a covering 3 of porous material, that includes a resin mixture 13; preferably, although not exclusively, of polyurethane, and a number of additives, including but not limited to plasticizers, dyes, thickeners, etc. According to the present invention, the tubular nucleus or core 2 is manufactured by means of a knitting technology, either weft knitting with one yard 7 (Fig. 1, Fig. 4) or warp knitting, with a yarn for each needle 7, 7', 7" (Fig. 2).

Tube 1 is applicable in the agricultural industry and gardening for the manufacturing of hoses and pipes for the practice of exudative irrigation on the basis that, thanks to the pores of the core 2 and of the covering 3, and due to the action of the pressure of water, the later goes out through the pores and irrigates the surrounding land.

As already mentioned, the core 2 can be a fabric consisting of a unique textile fibre 7 or yarn, woven by means of a self-intertwining process which is known as weft knitting, particularly for the manufacture of tubes 1 intended to be used in the manufacturing of straight sections of hoses for exudative irrigation. In this case, a unique yarn consecutively feeds the needles one after the other, forming horizontal rows of loops (see Fig. 1). As will become apparent to those skilled in the art, when the core 2 of textile tube consists of a unique textile fibre knitted by means of a knitting process with itself i.e. by means of a weft knitting technique, the combination of polyurethane resin and the weft knitting system give it a high temperature resistance (500C - 150°C) without altering its physical or chemical structure. Furthermore, the manufacturing of the core by means of the weft knitting process allows the direct production of the tube and simplifies the fabrication without requiring intermediate steps, which are usually involved in the weft and warp knitting process (or "flat knitting") with two yarns, according to ES2032239 patent

The second possibility cited is the manufacture of the core 2 with at least three yarns interwoven with three independent yarns 7, 7', 7", by means of a warp knitting process with a needle for each yarn (see Fig. 2 and Fig. 3). Each one of the needles of the knitting machine is fed with a different yarn that forms some vertical columns of loops. This process is suitable for applications where it is necessary that the pipe can develop complex circuits with curves, as it allows special bonds giving more versatility because of the fact that a yarn corresponds to each needle. The later gives the knitted tube the property to act as an accordion and thus preserve all the mechanical properties of the textile and it's covering while the exudative effect is being carried out. Nevertheless, the productive process is slower (at present is 2000 r.p.m. only). Fig. 4 shows different cross sections of the tube which form the core, with their bound variations of warp knitting to achieve different thickness and elasticity's, depending on the number of needles (between 3 and 30) and if they are arranged contiguous or one or several are "released". In the shown embodiment examples of the core 2, the porosity of the same that allows the exudative irrigation, can be appreciated.

According to the invention, resin 13 can be of an acrylic or polyurethane nature. In addition to those previously cited, additives can include biostatic substances adapted to prevent the proliferation of bacteria, algae or fungi, copper oxides, as well as additive agents to enhance the development of plant roots by forming an entry barrier for the roots. This allows production of a product that contributes the maximum benefits to sustainability from a environmental point of view while offering at the same time the maximum guarantee not to liberate any harmful substances to the crop to which it is destined, as it obviates the employ of fungicides, bactericides and algaecides.

In the resin and in the textile filaments, biostatic substances are used to avoid the proliferation of bacteria, fungi or algae in the tube of exudative irrigation.

Furthermore, the material of the nucleus or core 2 of textile tube includes natural fibres (cellulose, cotton,..) synthetic fibres, such as polyesters, polyamides, acrylic fibres, etc., a mixture of synthetic and natural fibres, and/or non-woven fabric.

The core 2 of the textile tubing can have a dye coating of resin of acrylic nature, pigmented in black colour, preferably containing smoke black, iron and/or copper oxides. The black colour of the surface will avoid the irrigation tube from being penetrated by the suns rays, as their effect on the liquid flowing through it would cause an acceleration of the eutrophication, due to the confluence of a fermentor broth (phosphorous, nitrates and potassium) and high temperatures in many cases. This effect would strongly reduce the properties of the tube as it could result in the proliferation of algae in its interior. This pigmentation will be achieved by mixing natural pigments mainly with iron and copper oxides. At the same time, the later has the additional function of avoiding penetration of roots inside the exudative tube, causing the ablation of the root ends that come into contact with the tube and generating a bifurcation of the same which would result in a more vigorous root. The resulting black colour will be intensified with smoke black.

In Fig. 5 is a schema of the manufacturing process of the porous tube 1 of the present invention.

The yarn or yarns 7, 7', 7" are fed for example from coils 4 to a circular knitting machine 5, in whose head 6 they are knitted by means of a weft knitting technique (a unique yarn 7 for each working group, feeding the needles one after the other), or a warp knitting technique (a yarn 7, 7'; 7", for each needle). From the knitting machine 5, a tubular material which forms the core 2 6 2' of the porous tube of the present invention, is obtained.

The tubular material, resulting from the knitting process, is subjected to a heat source 14 in order to heat seal its textile structure before starting with the resin treatment process.

The following process consists of submitting the core 2, 2' to plasma treatment in a plasma station 8 to improve the adherence of the resin that will be subsequently applied as a coating. This minimizes the quantity used as well as improves its properties of permeability and perspiration, maintaining at the same time the mechanical strength.

Concisely, we can say that the plasma, which is known as the "fourth state of the material", is a partially ionised gas containing highly reactivate particles (ions, electrons, radicals, photons, neutral particles and molecules in excited electronic states). This ionised gas is the result of the interaction with an electromagnetic field, under suitable conditions of pressure.

There are several ways for inducing the ionisation of the gases, depending on the technology that is being applied: luminescent discharge, "Glow discharge", crown discharge and discharge by dielectric breakdown of air.

The plasma treatment can be carried out directly to the yarns or to the resulting tubular textile obtained from the knitting system. Concerning the plasma treatment of the core 2, 2', when the used gases are of inorganic nature, namely: argon, oxygen, air, nitrogen, it can produce degradations in the external morphology of the knitting substrate, atom implantation and radical generation. This is commonly known as cleaning and activation of the surface of textile substrates.

The molecules of gases such as nitrogen and oxygen interact with the chemical groups of the surface of the substrate and form hydroxyl (OH), carbonyl (CO), carboxyl (-OOOH), amino (-NH2) and amido (-NHCO) groups. They in turn modify the surface properties from hydrophobic to hydrophilic; increment the adhesion, the wetting and the biocompatibility, which are phenomenon's that are difficult to produce in conventional methods.

Those species that are generated in the plasma are suitable for producing physical modifications and chemical reactions in the surface of the substrates submitted to the plasma action. The kind of modification or reaction depends on the nature of the plasma gases, on the level of energy applied and on the nature of the substrate (in this case the yarns 7, 7', 7"), which capacity of absorption is directly related to the value of the angle of contact, or angle forming the tangent of the surface of the drop of a liquid on the textile and/or solid material.

Following the plasma treatment, the core 2, 2' is subjected to a resin coating process 13, for example by soaking it in a bath of resin 3 in which also the additives are introduced, all of them in a fluid condition.

Afterwards, the core 2, 2' embedded of the resin mixture 13 and additives, is subjected to drying in a drying chamber 10, from which it is passed to a polymerisation chamber 11 for the resin setting 13. Tube 1 leaves the polymerisation chamber already manufactured.

Lastly, tube 1 is packed, for example after being previously coiled in a coil 12, for storage and expedition.

When the core 2 is produced by means of a weft knitting technique, it is preferably to use a circular machine 5 having small diameter 5, employing between 8 and 36 needles per inch in the perimeter of the cylinder, for diameters of cylinders between 3 mm and 60 mm.

As an important advantage, it is possible to say that the knitting system in a circular machine having a small diameter, in which the textile nucleus or core 2 is obtained from a unique yarn for each working group that intertwines it self forming horizontal rows or loops, is the only one that at present allows a greater knitting production for time unit comparisons with other knitting technologies that produce similar products. Thanks to the specific characteristics of this system it is possible to knit loops that give some unique properties of thickness and very important adaptability for achieving the aim of this product in question, as it allows:
1) Increasing the thickness of the quantity of resin 13 in each transversal unit of the fabric.
2) Giving a lot of physical consistence to the product that improves the manipulative conditions of the porous tube 1.
3) Flexibility allowing a good adaptation to the land.
4) Flexibility for the connexion to the pins where it has to be connected when it is working.
5) Ability to support expansions due to the freezing effects on the pipe.

The above being properties that would be impossible to reach with other knitting methods such as flat knitting.

Furthermore, the core 2 produced by the knitting technique has textile uniformity around its entire perimeter. Using the alternative flat knitting system to construct a tube, it is necessary to prepare the machine to make two flat fabrics while being joined by their selvedge. This selvedge gives uniformity to the fabric and accordingly a uniform effect of exudation in the perimeter of the tube but at the same time it subtracts a certain amount of flexibility as it has a different structure.

To obtain the knitted fabric it is necessary to allow the intervention of two elements, namely: the yarn and needle. With the controlled movement of the needles, the yarn intertwines itself, forming loops, connected one to the other by means of interloops.

Although at this point the description of the invention should be sufficiently clear for those skilled in the art, for a greater understanding here follows a summary explanation of the flat knitting technique that is applied in the present invention.

The weft-knitting loop is formed inside the head thanks to the interpenetration between the yarn guide, the front main bed, the cam assembly and the needles.

The yarn guide is the element responsible for feeding the unwound yarn from the holder devices to the needles. The needles collect the yarn, which has been fed by the yarn guide and transform it into fabric. The latch needles and the composite needles being those used in this invention, each one depending on the desired production speeds and the type of loop to knit. In order that the tissue has the maximum uniformity in the aspect of loops, the needles will work inside the prearranged front main bed.

Depending on the movement of the needles, the loops can be completed, loaded or retained. A completed loop is ready for using in the fabrics manufacturing.

This knitting system can be used with pressing rollers to achieve a more closed knit effect with the intention of producing pipes able to work at higher pressures. It is also possible to obtain a more closed loop when knitting synthetic materials, such as polypropylene and polyester (mono or multi-filament yarns). This effect will be further enhanced after applying heat to the tubular fabric, as it will seal by the heat effect 14 and will strengthen its structure.

According to the present invention it is preferable to use gauges ranging from size 8 and size 36, in other words, between 8 and 36 needles per inch in the perimeter of the cylinder, for cylinder diameters between 3 mm and 60 mm.

These needles will form a type of loop thanks to the cam assembly moving forward and backward and are responsible for imparting motion to needles. Thus, the cam assembly determines the quantity of yarn to be drawn and, as a consequence, the length of loop, which will be produced at the minimum possible thanks to the invention.

All this system depends on a creel that holds the raw material that is fed to the machine and a bed frame where the entire knitting device is situated.

In order to produce a fabric with tubular characteristics using the flat knitting technique, according to the previous state of the art, it is necessary to use the right and left selvedges as a seam of union between the upper and the lower fabrics. This seam gives the tube a structural stiffness additional to that already provided by the bond of a fabric formed according to the flat knitting technique. It will be apparent to those skilled in this art that this methodology gives the tube a much increased stiffness than that produced by the knitting technology used in the invention according to the weft or warp knitting system of textile tube 1. The existence of the selvedges in the flat knitting technology does not allow a total uniformity around the entire perimeter of the tube because of the seams. With the technique of the present invention, thanks to the technology of a knitting circular machine having a small diameter, all the perimeter of the tube is uniform, allowing uniform exudation around the entire perimeter of the tube.

## Claims

1. Porous tube (1) for exudative irrigation of the type that comprise a core (2) of textile tube, covered by a covering (3) of porous material, that includes a resin mixture (13) and additives, such as for example plasticizers, dye, thickeners, etc., **characterized in that** the core (2) of textile tube is a knitted fabric.

2. Porous tube (1) for exudative irrigation, according to claim 1, **characterized in that** the core (2) of textile tube consists on one or several fibres in the form of yarn in a unique textile fibre (7) or yarn knitted by means of a process of intertwining with itself, forming horizontal rows of loops.

3. Porous tube (1) for exudative irrigation, according to claim 1, **characterized in that** the core (2) of textile tube is a fabric consisting of two yarns interwoven with independent yarns, by means of a process of warp using a needle for each yarn, forming vertical columns of loops.

4. Porous tube (1) for exudative irrigation, according to any of the previous claims, **characterized in that** the resin (13) includes a resin of acrylic nature or polyurethane.

5. Porous tube (1) for exudative irrigation, according to any of the previous claims, **characterized in that** it includes biostatic substances, which are suitable to prevent the proliferation of bacteria, algae and fungi as additives.

6. Porous tube (1) for exudative irrigation, according to any of the previous claims, **characterized in that** the material of the core (2) of textile tube includes natural fibres (cellulose, cotton, etc.), synthetic fibbers, such as polyesters, polyamides, acrylic fibres, etc. or a mixture of synthetic and natural fibres.

7. Porous tube (1) for exudative irrigation, according to any of previous claims, **characterized in that** it includes copper oxides as additives to enhance the development of plant roots as a barrier for avoiding the penetration of roots.

8. Porous tube (1) for exudative irrigation, according to any of previous claims, **characterized in that** the core (2) of textile tube has a dye coating of a resin of acrylic nature pigmented in black colour.

9. Porous tube (1) for exudative irrigation, according to claim 8, **characterized in that** said dye coating includes smoke black, iron and/or cupper oxides.

10. Process for manufacturing a porous tube (1) for exudative irrigation, of the type which comprise a core (2) of textile tube, covered by a covering (3) of porous material, that includes a mixture of resin (13) and additives, such as for example plasticizers, dye, thickeners, etc., **characterized in that** the core of textile tube is manufactured by means of a knitting method in a knitting machine (5).

11. Process according to claim 10, **characterized in that** the core (2) of textile tube is manufactured by means of a weft knitting method, from a unique yarn (7) for each working group, that intertwines it self, forming horizontal rows of loops.

12. Process according to claim 10, **characterized in that** the core (2) of textile tube is manufactured by means of a warp knitting method, with at least three yarns (7, 7'; 7") and a needle for each yarn.

13. Process according to claim 11, **characterized in that** the knitting method includes using a circular machine having a small diameter (5), employing between 8 and 36 needles per inch in the perimeter of the cylinder, for cylinder diameters between 3 mm and 60 mm.

14. Process according to any of claims 10 to 13, **characterized in that** the core (2) of textile tube is subjected to a plasma treatment (8) to improve the adherence of the resin (13).

15. Process according to any of claims 4 to 10, **characterized in that** the core (2) of textile tube is subjected to a treatment of heat-setting (14) to give more consistence to the structure of the fabric.
